# EUROPEAN PATENT APPLICATION

(11) **EP 4 665 066 A1**
(43) Date of publication of application: **17.12.2025**
(21) Application number: 24753530.5
(22) Date of filing: 29.01.2024
(51) Int. Cl.: H04W 74/08, H04W 24/08, H04W 72/04, H04L 27/26, H04W 92/18, H04W 72/25, H04L 1/18, H04W 72/50

(54) **COMMUNICATION METHOD AND APPARATUS BASED ON COT IN UNLICENSED BAND**

(30) Priority: 07.02.2023 KR 20230016303; 01.03.2023 US 202363449261 P; 15.03.2023 KR 20230034029; 24.03.2023 KR 20230038805; 04.05.2023 KR 20230058471; 09.05.2023 KR 20230059907; 17.05.2023 KR 20230063747
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Plasseraud IP
(86) International application number: PCT/KR2024/001347
(87) International publication number: WO 2024/167200

(57) **Abstract**

Provided are a method by which a first device performs wireless communication and an apparatus supporting same. The method may comprise the steps of: receiving, from a second device through a physical sidelink control channel (PSCCH), first sidelink control information (SCI) for scheduling of second SCI and a physical sidelink shared channel (PSSCH); and receiving, from the second device through the PSSCH, the second SCI for channel occupancy time (COT) sharing. For example, the second SCI may comprise a first source ID, a first destination ID, cast type information, COT sharing cast type information, and a COT sharing additional ID.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method for performing wireless communication by a first device may be provided. For example, the method may comprise: receiving, from a second device, through a physical sidelink control channel (PSCCH), first sidelink control information (SCI) for scheduling of a physical sidelink shared channel (PSSCH) and second SCI; and receiving, from the second device, through the PSSCH, the second SCI for channel occupancy time (COT) sharing. For example, the second SCI may include a first source ID, a first destination ID, cast type information, COT sharing cast type information, and a COT sharing additional ID.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: receiving, from a second device, through a physical sidelink control channel (PSCCH), first sidelink control information (SCI) for scheduling of a physical sidelink shared channel (PSSCH) and second SCI; and receiving, from the second device, through the PSSCH, the second SCI for channel occupancy time (COT) sharing. For example, the second SCI may include a first source ID, a first destination ID, cast type information, COT sharing cast type information, and a COT sharing additional ID.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: receiving, from a second device, through a physical sidelink control channel (PSCCH), first sidelink control information (SCI) for scheduling of a physical sidelink shared channel (PSSCH) and second SCI; and receiving, from the second device, through the PSSCH, the second SCI for channel occupancy time (COT) sharing. For example, the second SCI may include a first source ID, a first destination ID, cast type information, COT sharing cast type information, and a COT sharing additional ID.

Based on an embodiment of the present disclosure, a non-transitory computer-readable storage medium storing instructions may be provided. For example, the instructions, when executed, may cause a first device to perform operations comprising: receiving, from a second device, through a physical sidelink control channel (PSCCH), first sidelink control information (SCI) for scheduling of a physical sidelink shared channel (PSSCH) and second SCI; and receiving, from the second device, through the PSSCH, the second SCI for channel occupancy time (COT) sharing. For example, the second SCI may include a first source ID, a first destination ID, cast type information, COT sharing cast type information, and a COT sharing additional ID.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an interlaced RB, based on an embodiment of the present disclosure.
FIG. 10 shows a procedure for a UE to transmit COT sharing information to another UE, based on an embodiment of the present disclosure.
FIG. 11 shows a method for a first device to perform wireless communication, based on an embodiment of the present disclosure.
FIG. 12 shows a method for a second device to perform wireless communication, based on an embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

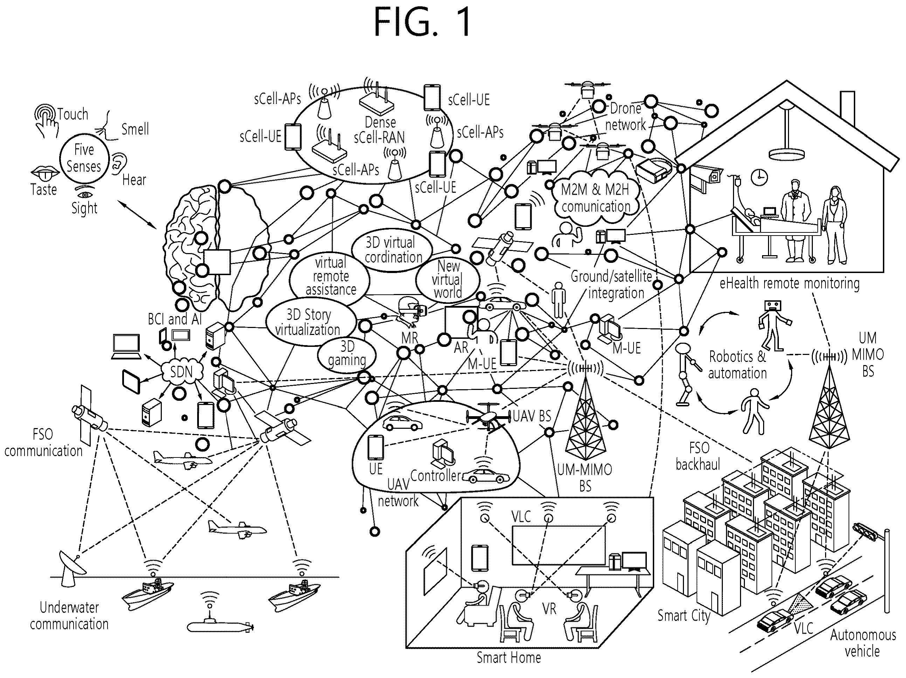

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

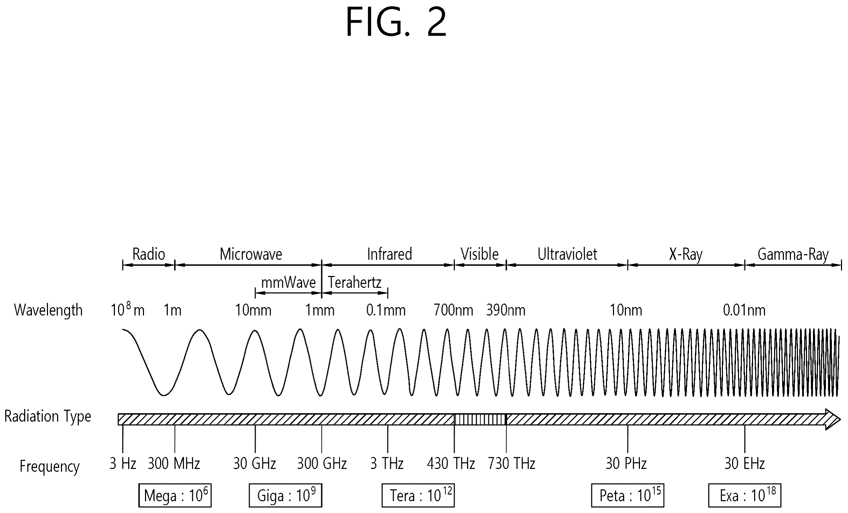

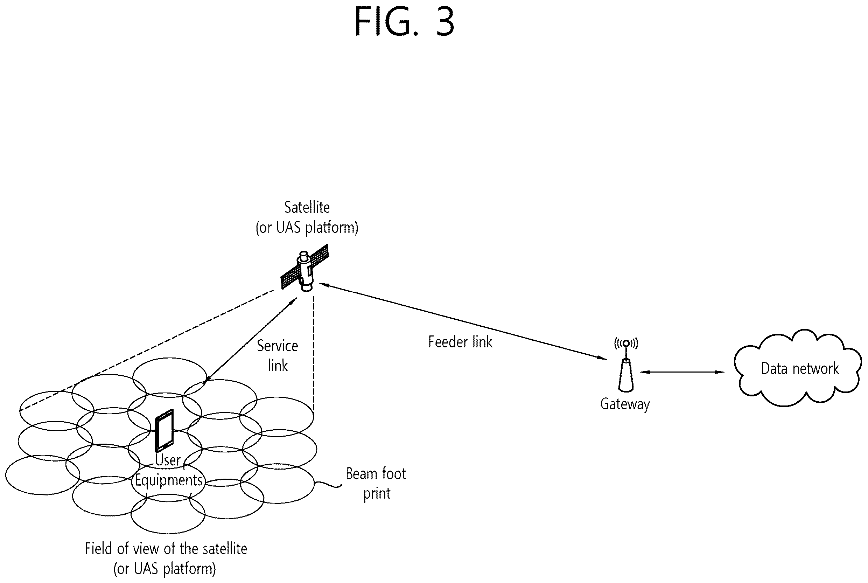

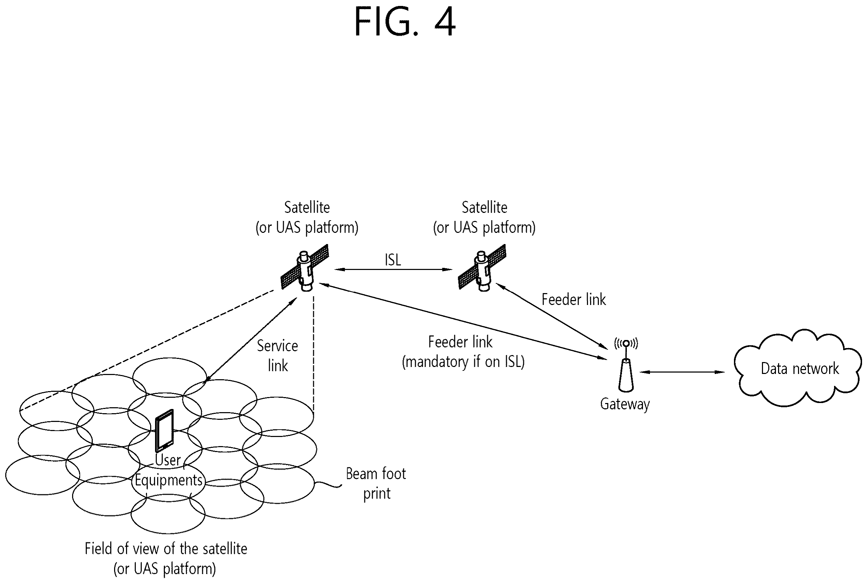

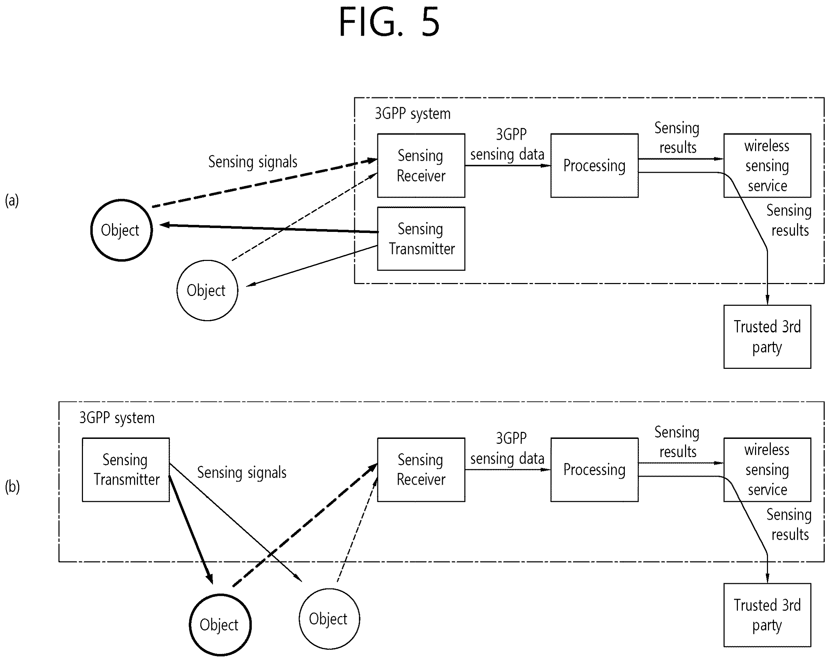

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

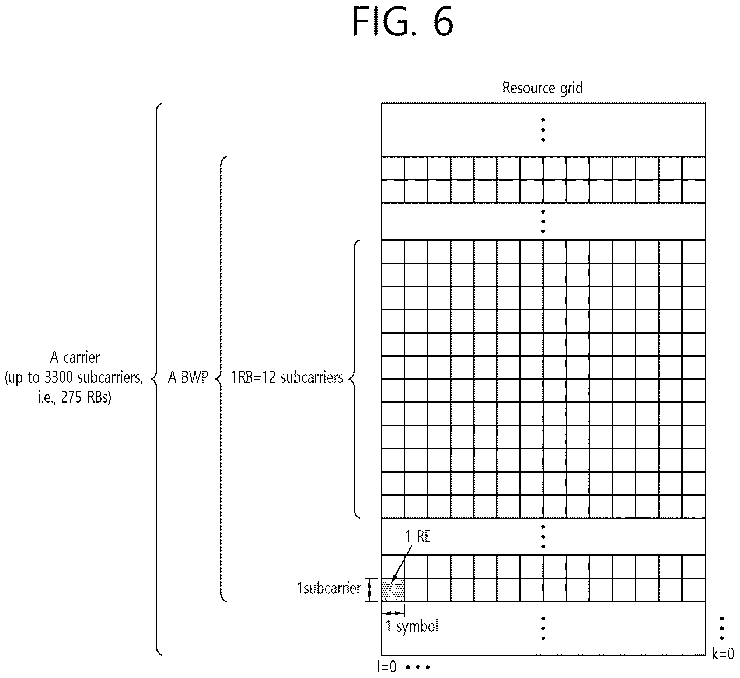

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

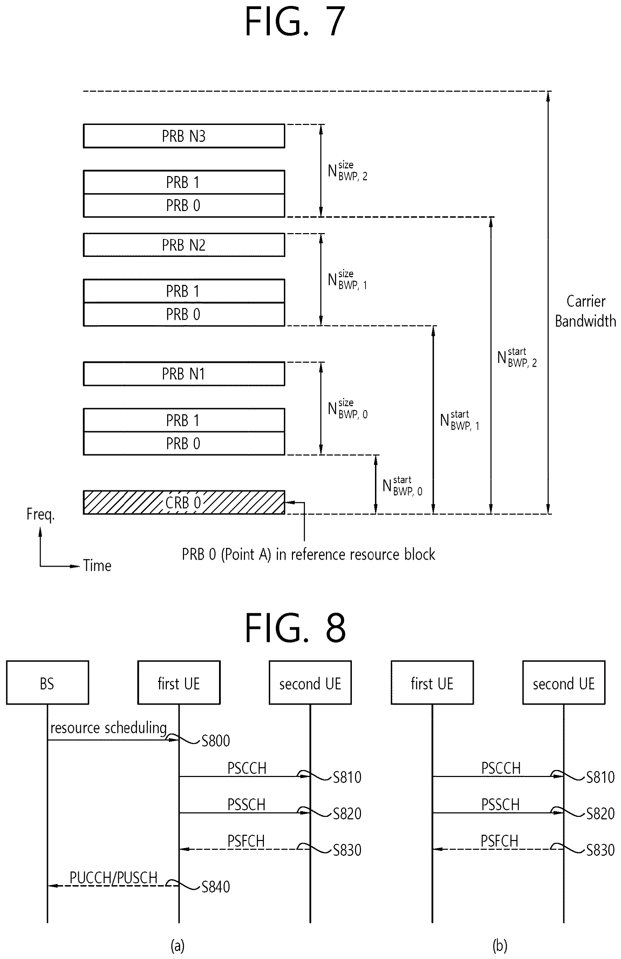

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

For example, the 1^{st}-stage SCI format may include a SCI format 1-A and/or a SCI format 1-B, and the 2^{nd}-stage SCI format may include a SCI format 2-A, a SCI format 2-B, a SCI format 2-C and/or a SCI format 2-D.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits
- Beta_offset indicator - 2 bits as provided by higher layer parameter sl-BetaOffsets2ndSCI
- Number of DMRS port - 1 bit
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 3
- CSI request - 1 bit

**[Table 3]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a hybrid automatic repeat request (HARQ) procedure will be described.

For example, the SL HARQ feedback may be enabled for unicast. For example, the SL HARQ feedback may be enabled for groupcast. For example, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit negative acknowledgement (NACK) to the transmitting UE through a PSFCH. Otherwise, if the receiving UE decodes the PSCCH of which the target is the receiving UE and if the receiving UE successfully decodes the transport block related to the PSCCH, the receiving UE may not transmit positive acknowledgement (ACK) to the transmitting UE.

(2) Groupcast option 2: After the receiving UE decodes the PSCCH of which the target is the receiving UE, if the receiving UE fails in decoding of the transport block related to the PSCCH, the receiving UE may transmit NACK to the transmitting UE through the PSFCH. In addition, if the receiving UE decodes the PSCCH of which the target is the receiving UE and if the receiving UE successfully decodes the transport block related to the PSCCH, the receiving UE may transmit ACK to the transmitting UE through the PSFCH.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots associated with the PSFCH slot and sub-channel j, where M^{PSFCH}_{subch,slot}= M^{PSFCH}_{PRB,set}/(N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 4.

**[Table 4]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

The UE applies one cyclic shift from a cyclic shift pair to a sequence used for the PSFCH transmission.

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

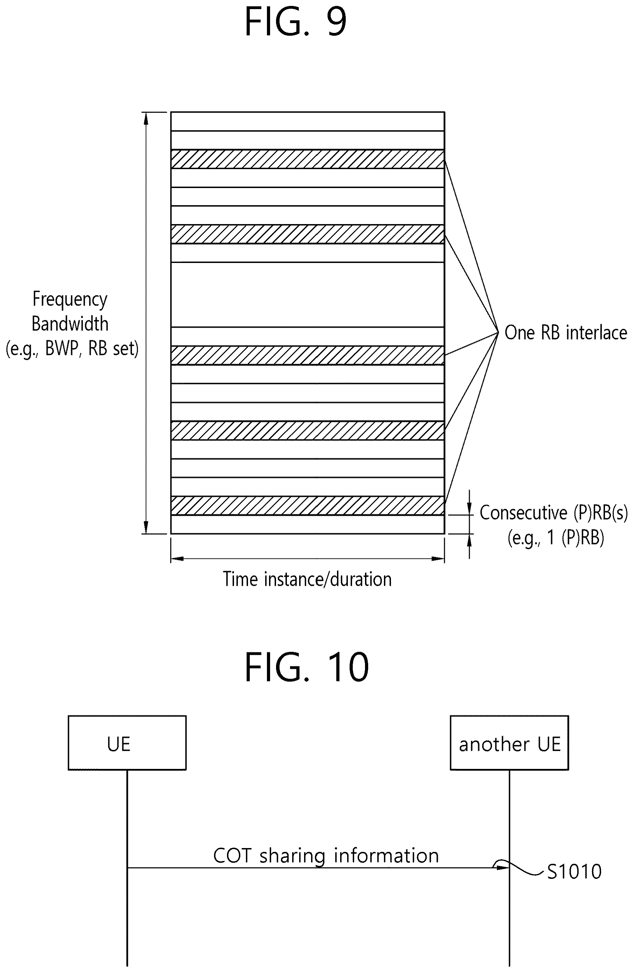

FIG. 9 shows an interlaced RB, based on an embodiment of the present disclosure. The embodiment of FIG. 9 may be combined with various embodiments of the present disclosure.

Referring to FIG. 9, interlaces of RBs may be defined in a frequency domain. An interlace m∈{0, 1, ..., M-1} may comprise (common) RBs {m, M+m, 2M+m, 3M+m, ...}, where M may represent the number of interlaced RBs given by Table 5.

**[Table 5]**

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

Meanwhile, in the next-generation system, the UE may perform a sidelink transmission operation and/or a sidelink reception operation in an unlicensed band. Meanwhile, for the operation in the unlicensed band, a channel sensing operation (e.g., energy detection/measurement) for a channel to be used may be performed before the UE performs transmission, depending on band-specific regulations or requirements. Only if the channel or the set of RBs to be used is determined to be IDLE as a result of the channel sensing (e.g., if the measured energy is less than or equal to a specific threshold), the UE may perform transmission in the unlicensed band. If the channel or the RB set to be used is determined to be busy as a result of the channel sensing (e.g., if the measured energy is greater than or equal to a specific threshold), the UE may cancel all or part of transmission in the unlicensed band. Meanwhile, in the operation in the unlicensed band, the UE may skip or simplify the channel sensing operation (make a channel sensing interval relatively small) within a certain time after transmission within a specific time duration. On the other hand, after the certain time has passed after the transmission, the UE may determine whether to transmit after performing the usual channel sensing operation. Meanwhile, for transmission in the unlicensed band, power spectral density (PSD) and/or a size of frequency occupation domain and/or a time interval of a signal/channel transmitted by the UE may be greater than or equal to a certain level, respectively, depending on regulations or requirements. Meanwhile, in the unlicensed band, in order to simplify channel sensing, it may be informed through channel occupancy time (COT) duration information that a channel obtained based on initial general channel sensing is occupied for a certain time, and the maximum length of the COT duration may be configured differently depending on a channel access priority class (CAPC) or a priority value of a data packet or a service.

Meanwhile, a base station may share a COT duration obtained by the base station based on channel sensing through DCI transmission, and the UE may perform a specific (indicated) channel sensing type and/or CP extension within the COT duration based on DCI information received from the base station. Meanwhile, a UE may share a COT duration obtained by the UE based on channel sensing with a base station that is a destination of UL transmission of the UE, and the related information may be provided through UL through configured grant-uplink control information (CG-UCI). In the above situation, the base station may perform simplified channel sensing within the COT duration shared by the UE. In the case of sidelink communication, there is a situation in which a UE receives, from a base station, information on resources to be used for sidelink transmission through DCI or RRC signaling, such as the mode 1 resource allocation (RA) operation, and there is a situation in which a UE performs sidelink transmission and reception through an inter-UE sensing operation without the assistance of the base station, such as the mode 2 RA operation.

Meanwhile, in the case of the channel access type 1, which may be used regardless of the channel occupancy time (COT) configuration, DL transmission may be performed based on the procedure shown in Table 6 to Table 7.

**[Table 6]**

| | |
|---|---|
| The eNB/gNB may transmit a transmission after first sensing the channel to be idle during the sensing slot durations of a defer duration *T_{d}* and after the counter *N* is zero in step 4. The counter *N* is adjusted by sensing the channel for additional sensing slot duration(s) according to the steps below: | |
| | 1) set *N* = *Nᵢₙᵢₜ,* where *Nᵢₙᵢₜ* is a random number uniformly distributed between 0 and *CWₚ,* and go to step 4; |
| | 2) if *N* > 0 and the eNB/gNB chooses to decrement the counter, set *N = N -* 1; |
| | 3) sense the channel for an additional sensing slot duration, and if the additional sensing slot duration is idle, go to step 4; else, go to step 5; |
| | 4) if *N* = 0, stop; else, go to step 2. |
| | 5) sense the channel until either a busy sensing slot is detected within an additional defer duration *T_{d}* or all the sensing slots of the additional defer duration *T_{d}* are detected to be idle; |
| | 6) if the channel is sensed to be idle during all the sensing slot durations of the additional defer duration *T_{d}*, go to step 4; else, go to step 5; |
| If an eNB/gNB has not transmitted a transmission after step 4 in the procedure above, the eNB/gNB may transmit a transmission on the channel, if the channel is sensed to be idle at least in a sensing slot duration *Tₛₗ* when the eNB/gNB is ready to transmit and if the channel has been sensed to be idle during all the sensing slot durations of a defer duration *T_{d}* | |
| immediately before this transmission. If the channel has not been sensed to be idle in a sensing slot duration *Tₛₗ* when the eNB/gNB first senses the channel after it is ready to transmit or if the channel has been sensed to be not idle during any of the sensing slot durations of a defer duration *T_{d}* immediately before this intended transmission, the eNB/gNB proceeds to step 1 after sensing the channel to be idle during the sensing slot durations of a defer duration *T_{d}*. | |
| The defer duration *T_{d}* consists of duration *T_{f}* = 16us immediately followed by *mₚ* consecutive sensing slot durations *Tₛₗ,* and *T_{f}* includes an idle sensing slot duration *Tₛₗ* at start of *T_{f}.* | |

**[Table 7]**

| | | |
|---|---|---|
| xIf a gNB transmits transmissions including PDSCH that are associated with channel access priority class *p* on a channel, the gNB maintains the contention window value *CWₚ* and adjusts *CWₚ* before step 1 of the procedure described in clause 4.1.1 for those transmissions using the following steps: | | |
| | 1) For every priority class *p* ∈ {1,2,3,4}, set *CWₚ = CW_{min,p}.* | |
| | 2) If HARQ-ACK feedback is available after the last update of *Wₚ* , go to step 3. Otherwise, if the gNB transmission after procedure described in clause 4.1.1 does not include a retransmission or is transmitted within a duration *T_{w}* from the end of the *reference duration* corresponding to the earliest DL channel occupancy after the last update of *CWₚ,* go to step 5; otherwise go to step 4. | |
| | 3) | The HARQ-ACK feedback(s) corresponding to PDSCH(s) in the reference duration for the latest DL channel occupancy for which HARQ-ACK feedback is available is used as follows: |
| | | a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4. |
| | 4) Increase *CWₚ* for every priority class *p* ∈ {1,2,3,4} to the next higher allowed value. | |
| | 5) For every priority class *p* ∈ {1,2,3,4}, maintain CWₚ as it is; go to step 2. | |
| The *reference duration* and duration *T_{w}* in the procedure above are defined as follows: | | |
| | - The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment. | |
| | - *T_{w}* = max (*T_{A}, T_{B} +* 1*ms*) where *T_{B}* is the duration of the transmission burst from start of the *reference duration* in ms and *T_{A}* = 5*ms* if the absence of any other technology sharing the channel can not be guaranteed on a long-term basis (e.g. by level of regulation), and *T_{A}* = 10*ms* otherwise. | |
| If a gNB transmits transmissions using Type 1 channel access procedures associated with the channel access priority class p on a channel and the transmissions are not associated with explicit HARQ-ACK feedbacks by the corresponding UE(s), the gNB adjusts *CWₚ* before step 1 in the procedures described in subclase 4.1.1, using the latest *CWₚ* used for any DL transmissions on the channel using Type 1 channel access procedures associated with the channel access priority class *p.* If the corresponding channel access priority class *p* has not been used for any DL transmissions on the channel, *CWₚ = CW_{min,p}* is used. | | |

Meanwhile, for the channel access type 1, which may be used regardless of the channel occupancy time (COT) configuration, UL transmission may be performed based on the procedure shown in Table 8 to Table 9.

**[Table 8]**

| | |
|---|---|
| A UE may transmit the transmission using Type 1 channel access procedure after first sensing the channel to be idle during the slot durations of a defer duration *T_{d}*, and after the counter *N* is zero in step 4. The counter *N* is adjusted by sensing the channel for additional slot duration(s) according to the steps described below. | |
| | 1) set *N* = *Nᵢₙᵢₜ*, where *Nᵢₙᵢₜ* is a random number uniformly distributed between 0 and *CWₚ,* and go to step 4; |
| | 2) if *N* > 0 and the UE chooses to decrement the counter, set *N = N -* 1; |
| | 3) sense the channel for an additional slot duration, and if the additional slot duration is idle, go to step 4; else, go to step 5; |
| | 4) if *N* = 0, stop; else, go to step 2. |
| | 5) sense the channel until either a busy slot is detected within an additional defer duration *T_{d}* or all the slots of the additional defer duration *T_{d}* are detected to be idle; |
| | 6) if the channel is sensed to be idle during all the slot durations of the additional defer duration *T_{d}*, go to step 4; else, go to step 5; |
| If a UE has not transmitted a UL transmission on a channel on which UL transmission(s) are performed after step 4 in the procedure above, the UE may transmit a transmission on the channel, if the channel is sensed to be idle at least in a sensing slot duration *Tₛₗ* when the UE is ready to transmit the transmission and if the channel has been sensed to be idle during all the slot durations of a defer duration *T_{d}* immediately before the transmission. If the channel has not been sensed to be idle in a sensing slot duration *Tₛₗ* when the UE first senses the channel after it is ready to transmit, or if the channel has not been sensed to be idle during any of the sensing slot durations of a defer duration *T_{d}* immediately before the intended transmission, the UE proceeds to step 1 after sensing the channel to be idle during the slot durations of a defer duration *T_{d}*. The defer duration *T_{d}* consists of duration *T_{f}* = 16*us* immediately followed by *mₚ* consecutive slot durations where each slot duration is *Tₛₗ* = 9*us,* and *T_{f}* includes an idle slot duration *Tₛₗ* at start of *T_{f}.* | |

**[Table 9]**

| | | |
|---|---|---|
| If a UE transmits transmissions using Type 1 channel access procedures that are associated with channel access priority class p on a channel, the UE maintains the contention window value *CWₚ* and adjusts *CWₚ* for those transmissions before step 1 of the procedure described in clause 4.2.1.1, using the following steps: | | |
| | 1) For every priority class *p* ∈ {1,2,3,4}, set *CWₚ = CW_{min,p}*; | |
| | 2) If HARQ-ACK feedback is available after the last update of *CWₚ,* go to step 3. Otherwise, if the UE transmission after procedure described in clause 4.2.1.1 does not include a retransmission or is transmitted within a duration *T_{w}* from the end of the *reference duration* corresponding to the earliest UL channel occupancy after the last update of *CWₚ,* go to step 5; otherwise go to step 4. | |
| | 3) The HARQ-ACK feedback(s) corresponding to PUSCH(s) in the *reference duration* for the latest UL channel occupancy for which HARQ-ACK feedback is available is used as follows: | |
| | | a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4. |
| | 4) Increase *CWₚ* for every priority class *p* ∈ {1,2,3,4} to the next higher allowed value; | |
| | 5) For every priority class *p* ∈ {1,2,3,4}, maintain *CWₚ* as it is; go to step 2. | |
| The HARQ-ACK feedback, *reference duration* and duration *T_{w}* in the procedure above are defined as the following: | | |
| | - For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows: | |
| | | - If a new transmission is indicated, 'ACK' is assumed for the transport blocks or code block groups in the corresponding PUSCH(s) for the TB-based and CBG-based transmission, respectively. |
| | | - If a retransmission is indicated for TB-based transmissions, 'NACK' is assumed for the transport blocks in the corresponding PUSCH(s). |
| | | - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively. |
| - The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment. | | |
| | - *T_{w}* = max (*T_{A}, T_{B} +* 1*ms*) where *T_{B}* is the duration of the transmission burst from start of the *reference duration* in ms and *T_{A}* = 5*ms* if the absence of any other technology sharing the channel cannot be guaranteed on a long-term basis (e.g. by level of regulation), and *T_{A}* = 10*ms* otherwise. | |

Meanwhile, the channel access type 2, which is a simplified channel access type, may be used within a channel occupancy time (COT) before transmission, and DL transmission may be performed based on the procedure shown in Table 10.

**[Table 10]**

| | |
|---|---|
| 4.1.2 Type 2 DL channel access procedures | |
| This clause describes channel access procedures to be performed by an eNB/gNB where the time duration spanned by sensing slots that are sensed to be idle before a downlink transmission(s) is deterministic. | |
| If an eNB performs Type 2 DL channel access procedures, it follows the procedures described in clause 4.1.2.1. | |
| Type 2A channel access procedures as described in clause 4.1.2.1 are only applicable to the following transmission(s) performed by an eNB/gNB: | |
| | - Transmission(s) initiated by an eNB including discovery burst and not including PDSCH where the transmission(s) duration is at most 1*ms*, or |
| | - Transmission(s) initiated by a gNB with only discovery burst or with discovery burst multiplexed with non-unicast information, where the transmission(s) duration is at most 1ms, and the discovery burst duty cycle is at most 1/20, or |
| | - Transmission(s) by an eNB/ gNB following transmission(s) by a UE after a gap of 25*us* in a shared channel occupancy as described in clause 4.1.3. |
| Type 2B or Type 2C DL channel access procedures as described in clause 4.1.2.2 and 4.1.2.3, respectively, are applicable to the transmission(s) performed by a gNB following transmission(s) by a UE after a gap of 16*us* or up to 16*us,* respectively, in a shared channel occupancy as described in clause 4.1.3. | |
| 4.1.2.1 Type 2A DL channel access procedures | |
| An eNB/gNB may transmit a DL transmission immediately after sensing the channel to be idle for at least a sensing interval *T*_{*short*_*dl*} = 25*us*. *T*_{*short*_*dl*} consists of a duration *T_{f}* = 16*us* immediately followed by one sensing slot and *T_{f}* includes a sensing slot at start of *T_{f}.* The channel is considered to be idle for *T_{short_dl}* if both sensing slots of *T_{short_dl}* are sensed to be idle. | |
| 4.1.2.2 Type 2B DL channel access procedures | |
| A gNB may transmit a DL transmission immediately after sensing the channel to be idle within a duration of *T_{f}* = 16*us. T_{f}* includes a sensing slot that occurs within the last 9*us* of *T_{f}.* The channel is considered to be idle within the duration *T_{f}* if the channel is sensed to be idle for a total of at least 5*us* with at least 4*us* of sensing occurring in the sensing slot. 4.1.2.3 Type 2C DL channel access procedures | |
| When a gNB follows the procedures in this clause for transmission of a DL transmission, the gNB does not sense the channel before transmission of the DL transmission. The duration of the corresponding DL transmission is at most 584*us*. | |

Meanwhile, the channel access type 2, which is a simplified channel access type, may be used within a channel occupancy time (COT) before transmission, and UL transmission may be performed based on the procedure shown in Table 11.

**[Table 11]**

| |
|---|
| 4.2.1.2 Type 2 UL channel access procedure |
| This clause describes channel access procedures by UE where the time duration spanned by the sensing slots that are sensed to be idle before a UL transmission(s) is deterministic. If a UE is indicated by an eNB to perform Type 2 UL channel access procedures, the UE follows the procedures described in clause 4.2.1.2.1. |
| 4.2.1.2.1 Type 2A UL channel access procedure |
| If a UE is indicated to perform Type 2A UL channel access procedures, the UE uses Type 2A UL channel access procedures for a UL transmission. The UE may transmit the transmission immediately after sensing the channel to be idle for at least a sensing interval *T*_{short_ul} = 25*us. T*_{short_ul} consists of a duration *T_{f}* = 16usimmediately followed by one sensing slot and *T_{f}*includes a sensing slot at start of *T_{f}.* The channel is considered to be idle for *T*_{short_ul} if both sensing slots of *T*_{short_ul}.are sensed to be idle. |
| 4.2.1.2.2 Type 2B UL channel access procedure |
| If a UE is indicated to perform Type 2B UL channel access procedures, the UE uses Type 2B UL channel access procedure for a UL transmission. The UE may transmit the transmission immediately after sensing the channel to be idle within a duration of *T_{f} = 16us. T_{f}* includes a sensing slot that occurs within the last 9us of *T_{f}.* The channel is considered to be idle within the duration *T_{f}* if the channel is sensed to be idle for total of at least 5*us* with at least 4*us* of sensing occurring in the sensing slot. |
| 4.2.1.2.3 Type 2C UL channel access procedure |
| If a UE is indicated to perform Type 2C UL channel access procedures for a UL transmission, the UE does not sense the channel before the transmission. The duration of the corresponding UL transmission is at most 584*us*. |

In embodiment(s) of the present disclosure, a TYPE 2A SL channel access may be in the same manner as the TYPE 2A DL and/or UL channel access. For example, the TYPE 2A SL channel access may be performed in a sensing interval T_short_sl=25us, where the interval may consist of a duration T_f=16us immediately followed by one sensing slot and T_f may include a sensing slot at start of T_f. The basic IDLE determination in the TYPE 2A SL channel access may also borrow IDLE determination from the DL or UL channel access.

In embodiment(s) of the present disclosure, a TYPE 2B SL channel access may be in the same manner as the TYPE 2B DL and/or UL channel access. For example, the TYPE 2B SL channel access may consist of a sensing interval of T_f=16us, and T_f may include a sensing slot in the last 9us portion. For example, in the case of the TYPE 2B SL channel access, the UE may perform transmission immediately after sensing a channel to be idle within a duration of T_f=16us. T_f may include a sensing slot that occurs within the last 9us of T_f. The basic IDLE determination in the TYPE 2B SL channel access may also borrow IDLE determination from the DL or UL channel access.

In embodiment(s) of the present disclosure, a TYPE 2C SL channel access may be in the same manner as the TYPE 2C DL and/or UL channel access. For example, in the case of the TYPE 2C SL channel access, the UE may not perform channel sensing. Instead, the time duration of SL transmission may be at most 584us.

In embodiment(s) of the present disclosure, a TYPE 1 SL channel access may be in the same manner as the TYPE 1 DL and/or UL channel access. For example, the UE may randomly derive an integer value N based on a contention window size corresponding to a priority class. Then, if a channel sensing result for a defer duration T_d corresponding to the priority class is idle, the UE may decrease the N-1 counter value in units of T_sl when IDLE. If the value of the counter is zero, the UE may occupy the RB set or the channel subject to channel sensing. If a part of a channel sensing result for the T_sl duration is determined to be busy, the UE may keep the counter value until a channel sensing result for the defer duration T_d is idle, and the UE may continue to perform channel sensing. In the above, the defer duration T_d may consist of T_f=16us and contiguous m_p * T_sl after T_f=16us, where m_p may be a value determined by the priority class (p), and T_sl=9us may be a time interval in which channel sensing is performed.

Hereinafter, a channel access priority class (CAPC) is described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 12 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 12]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Table 13 shows that mₚ, a minimum contention window (CW), a maximum CW, a maximum channel occupancy time (MCOT), and an allowed CW size vary depending on channel access priority classes, in DL.

**[Table 13]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 13, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

Table 14 shows that mₚ, a minimum contention window (CW), a maximum CW, a maximum channel occupancy time (MCOT), and an allowed CW size vary depending on channel access priority classes, in UL.

**[Table 14]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 14, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

In embodiment(s) of the present disclosure, the UE may not be ready to transmit sidelink transmission while the UE has occupied a channel through the TYPE 1 SL channel access. In this case, the UE may configure a defer duration of length T_d and a sensing duration of length T_sl immediately before the sidelink transmission that it is ready to transmit. Herein, if both are idle, the UE may immediately perform the sidelink transmission, but if at least one of the defer duration and the sensing duration is busy, the UE may again perform the TYPE 1 SL channel access. For example, if the sidelink transmission is not possible at a time when channel sensing ends (e.g., if the end of the channel sensing is after the start of the sidelink transmission), the UE may reselect the sidelink transmission resource(s). For example, the reselected resource may be selected by considering the end time of the channel sensing and/or the length of the remaining sensing interval, etc. For example, the remaining sensing interval may be a value derived from assuming that all channel sensing is idle.

Meanwhile, when the UE performs channel sensing for a channel sensing slot and/or a defer duration, etc., if an energy value measured for the time interval is greater than or equal to, or exceeds, a specific energy detection threshold, the UE may determine that the corresponding channel or RB set is busy, and if an energy value measured for the time interval is less than or equal to, or below, a specific energy detection threshold, the UE may determine that the corresponding channel or RB set is idle.

Meanwhile, if the UE indicates a UE that can use a shared COT only by using an L1 source ID and/or an L1 destination ID, a UE that is not the target of the COT sharing may use the shared COT due to an L1 ID collision. In this case, a fairness problem with other RATs may occur. Meanwhile, if the size of COT sharing information in second SCI is large, the detection performance of the second SCI may be significantly reduced.

FIG. 10 shows a procedure for a UE to transmit COT sharing information to another UE, based on an embodiment of the present disclosure. The embodiment of FIG. 10 may be combined with various embodiments of the present disclosure.

Referring to FIG. 10, a UE may transmit COT sharing information to another UE. Hereinafter, a method for performing communication based on COT sharing and a device supporting the same are proposed based on various embodiments of the present disclosure.

For example, in the case of COT sharing, the UE may select a channel access procedure of type-2 category based on a time difference between an end time of received SL transmission and a start time of SL transmission to be transmitted for resources within an RB set for COT sharing. For example, the method of measuring the time difference may be limited to a case where a guard band is configured for a carrier and/or a channel. For example, the received SL transmission may be limited to a SL channel/signal transmitted by a COT initiating UE. For example, the PSCCH/PSSCH including COT sharing information may have the same source ID and/or destination ID. For example, the received SL transmission may be all or part of the SL transmissions that can be received by the UE. For example, the received SL transmission may be at least SL resources that the UE has received within a reception resource pool. For example, the received SL transmission may share the same COT.

For example, if a guard band is not configured for at least a carrier and/or a channel, a channel access type of type-2 category may be selected based on a time difference between an end time of received SL transmission and a start time of SL transmission to be transmitted for resources within and/or outside an RB set for COT sharing. For example, the UE may use different type-1 and/or type-2 channel access types by measuring a time gap for each RB set corresponding to SL channel transmission. That is, in the above case, the UE may perform channel sensing based on different channel access types for each RB set for a single SL channel transmission. For example, if the guard band is not configured, the COT initiating UE may perform LBT for all RB sets, and if it is determined to be idle, it may perform COT initialization and COT sharing. For example, in the above situation, all RB sets may be indicated when sharing the COT, and/or all RB sets may be the target of COT sharing without an indication. For example, all RB sets may be limited to those that exist in a SL carrier, exist in a SL BWP, or exist in a (transmission and/or reception) resource pool of the UE. For example, whether or not COT sharing information includes RB set-related information may be (pre-)configured for each resource pool, each SL carrier, and/or each SL BWP.

Meanwhile, a SL channel used by the COT initiating UE when initializing a COT and a SL channel to provide COT sharing information may be different. For example, the UE may initialize the COT when transmitting a first PSCCH/PSSCH, and the COT sharing information may be transmitted through a second PSCCH/PSSCH, and/or the second PSCCH/PSSCH may be transmitted later in time than the first PSCCH/PSSCH. For example, the UE may initialize the COT when transmitting a PSFCH, and the COT sharing information may be transmitted through a PSCCH/PSSCH, and/or the PSCCH/PSSCH may be transmitted later in time than the PSFCH.

Meanwhile, COT sharing information may be determined based on a SL channel to be used for COT initialization and a transmission time, and in the above case, if the actual transmission of the SL channel to be used for COT initialization fails based on a prioritization procedure and/or a channel access procedure, the COT sharing information may no longer be valid.

For example, a time gap between a first SL channel to be used for COT initialization and a second SL channel to be used for providing COT sharing information may be a (pre-)configured and/or predefined threshold or may be greater than or equal to the threshold. The rationale for this is to secure time for canceling and/or modifying COT sharing information transmission through the second channel in case that the UE drops the first SL channel. For example, the time gap may be a minimum PSSCH-to-PSFCH timing value. For example, the time gap may be a value of T_1,proc or a value of T_1, and the value of T_1,proc may be 3 slots, 5 slots and 9 slots for 15 kHz subcarrier spacing (SCS), 30 kHz SCS and 60 kHz SCS, respectively, and/or the value of T_1 may be a value selected by the UE with an upper limit of the value of T_1,proc. For example, the time gap may be T_0,proc, and the value of T_0,proc may be 1 slot, 1 slot, and 2 slots for 15kHz subcarrier spacing (SCS), 30kHz SCS, and 60kHz SCS, respectively.

Meanwhile, if a time gap between a first SL channel to be used for COT initialization and a second SL channel to be used for providing COT sharing information is large, the length of the remaining COT duration may be reduced, so that the benefit of COT sharing may be drastically reduced.

For example, if the first SL channel to be used for COT initialization and the second SL channel to be used for providing COT sharing information are different, and/or if a time gap between the first SL channel and the second SL channel is less than or equal to a certain level (e.g., a (pre-)configured or predefined threshold), the UE may determine/generate COT sharing information based on the transmission time of the first SL channel and/or the second SL channel and/or the channel(s). For example, when configuring the remaining COT duration, it may be determined by the UE based on a first maximum COT duration determined based on the CAPC and/or the transmission time of the first SL channel, and/or it may be determined by the UE based on a second maximum COT duration determined based on the CAPC and/or the transmission time of the second SL channel, and/or it may be determined by the UE based on an earlier one of the end times according to the first maximum COT duration and the second maximum COT duration. For example, when configuring the remaining COT duration, it may be determined by the UE based on a third maximum COT duration determined based on the CAPC of the first SL channel and/or the transmission time of the second SL channel, and/or it may be determined by the UE based on a fourth maximum COT duration determined based on the CAPC of the second SL channel and/or the transmission time of the first SL channel. For example, the UE may determine/configure a CAPC value to be indicated by the COT sharing information as the CAPC value of the first SL channel and/or the CAPC value of the second SL channel and/or the maximum value of the values and/or the minimum value of the values and/or a value determined by the UE. For example, the UE may determine/configure information for an RB set to be indicated by the COT sharing information as the entire or a subset of the allocated RB set(s) of the first SL channel and/or the entire or a subset of the allocated RB set(s) of the second SL channel and/or a value determined by the UE.

Various embodiments of the present disclosure may be used/applied differently depending on whether the UE continues the channel access procedure for the first SL channel that was in progress or (re)starts the channel access procedure for the second SL channel when the UE drops the first SL channel (due to LBT failure).

For example, when the UE drops the first SL channel (due to LBT failure), thereby terminating the channel access procedure for the first SL channel that was in progress, the UE may cancel the transmission of the second SL channel including the COT sharing information and/or exclude the COT sharing information (at least based on the first SL channel) from the second SL channel.

Meanwhile, the length of the maximum COT duration may be determined in msec units. If the UE initializes a COT through PSFCH transmission, some PSCCH/PSSCH transmissions may exceed the maximum COT duration because the COT duration ends in the middle of the slot, or the actual maximum COT duration may be reduced for the above reasons.

For example, (at least) if the UE initializes the COT through PSFCH transmission, and/or if the UE initializes the COT or generates COT sharing information based on the PSFCH transmission timing, the UE may determine/configure the start of the COT duration as the end time of the PSFCH transmission or the start of the earliest slot thereafter or the start of the SL transmission by application of CPE from the start of the slot. For example, (at least) if the UE initializes the COT through PSFCH transmission, and/or if the UE initializes the COT or generates COT sharing information based on the PSFCH transmission timing, the UE may skip a part of PSCCH/PSSCH transmission when transmitting the PSCCH/PSSCH within the COT duration in a slot overlapping with the end time of the COT duration. For example, a part of the PSCCH/PSSCH transmission may be unused for a certain number of symbols or an absolute time interval from the end time of the PSCCH/PSSCH. For example, the UE may perform rate matching for the PSCCH/PSSCH reduced by the length of the partial time interval, and/or may perform puncturing the end time interval. For example, whether the UE reduces the length of the partial time interval for the PSCCH/PSSCH and/or whether the UE performs rate-matching or puncturing in the above situation may be autonomously determined by COT duration information (e.g., if the end time of the COT duration does not match the end time of the PSSCH) and/or may be (pre-)configured and/or may be indicated in 1st SCI and/or 2nd SCI. For example, if the end time of the COT duration is located in the middle of a slot, and/or the UE transmits the PSCCH/PSSCH in the slot, and/or the PSCCH/PSSCH transmission is within the COT duration and shares the COT, the UE may configure a PSFCH overhead indicator value to 3, and the UE may reduce the symbol interval length by the PSFCH overhead interval for the PSCCH/PSSCH transmission (even if there is no PSFCH occasion or resource in the slot). For example, if the end time of the PSCCH/PSSCH transmission is later than the end time of the maximum COT duration and/or the end time of the COT duration, the UE may not use the COT when transmitting the PSCCH/PSSCH, and/or the UE may attempt transmission based on a type 1 channel access procedure when transmitting the PSCCH/PSSCH.

For example, when the UE initiates the COT, the start of the COT duration length may be the start part of the SL channel excluding CPE. For example, when the UE initiates the COT, the start of the COT duration length may be the start part of the SL channel including CPE.

For example, when the UE performs transmission, an RSRP threshold and/or a SL (reception) priority threshold (which is referred to when determining whether to perform pre-emption) may differ or may be separately (pre-)configured depending on a channel access type and/or whether a transmission resource is located within or outside the COT.

For example, when providing COT sharing information, the COT initiating UE may include information for UE(s) using the COT, and the information for UE(s) that can use the COT may (additionally) provide an L1 and/or L2 source ID, an L1 and/or L2 destination ID, and/or cast type information.

For example, the COT initiating UE may transmit COT sharing information through second SCI. In this case, the following information may be transmitted through the second SCI.
- HARQ process number - 4 bits
- New data indicator - 1 bit
- Redundancy version - 2 bits
- Source ID - 8 bits
- Destination ID - 16 bits
- HARQ feedback enable/disable indicator - 1 bit
- Cast type indicator - 2 bits as defined in Table 3
- CSI request - 1 bit
- CAPC - 2 bits
- COT sharing cast type - 2 bits as defined in Table 15
- COT sharing additional ID - 24 bits
- Remaining COT duration

**[Table 15]**

| Value of cast type indicator or COT sharing cast type | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK; or reserved |

For example, the COT sharing additional ID may include an L1 destination ID (e.g., a 16-bit L1 destination ID) and/or an L1 source ID (e.g., an 8-bit L1 source ID).

For example, when providing COT sharing information, the COT initiating UE may include information for UE(s) using the COT, and the UE information may be in the form of a third ID, and the third ID may be related to an L1 and/or L2 source ID, an L1 and/or L2 destination ID, and/or cast type information. The relation may be (pre-)configured, exchanged/configured through PC5-RRC signaling between UEs, or determined by a higher layer.

Meanwhile, when a third UE transmits a PSFCH after the COT responding UE transmits a groupcast PSCCH/PSSCH, the transmission target of the PSFCH may not include the COT initiating UE. For example, if the UE transmits the PSFCH in response to the PSCCH/PSSCH of the (groupcast) destination ID related to COT sharing, the UE may use the COT (perform transmission based on a channel access procedure of type-2 category) when transmitting the PSFCH (even if the PSFCH transmission does not include transmission to the COT initiating UE). For example, whether or not to use the COT for the PSFCH transmission may operate differently depending on a priority and/or a CAPC value. For example, in the case of a high priority, a relaxation of the COT usage condition for the PSFCH transmission may be applied.

For example, if the UE transmits the PSFCH in response to the PSCCH/PSSCH of the (groupcast) destination ID related to COT sharing, and if the PSFCH transmission does not include transmission to the COT initiating UE, the PSFCH transmission may be performed based on a type 1 channel access procedure. For example, COT sharing information may still include a source ID even in the case of groupcast. For example, the UE may determine whether the COT initiating UE is the target for the PSFCH transmission in response to the groupcast PSSCH based on the groupcast source ID, and/or the UE may use the COT when transmitting the PSFCH if the COT initiating UE is the target, and/or the UE may not use the COT when transmitting the PSFCH if the COT initiating UE is not the target.

For example, if the UE transmits the PSFCH in response to the PSCCH/PSSCH of the (groupcast) destination ID related to COT sharing, and if the PSFCH transmission does not include transmission to the COT initiating UE, the UE may (additionally) transmit the PSFCH on the PSFCH resource corresponding to the groupcast source ID of the COT initiating UE, and/or control information for the PSFCH transmitted through the PSFCH resource may be the same as the response to the PSCCH/PSSCH of the (groupcast) destination ID received by the UE, and/or may be a value determined based on UE implementation or a value determined randomly by the UE.

Meanwhile, even if a COT initiating UE is not included in the transmission target for PSFCH transmission, if there is a SL channel/signal transmitted to the COT initiating UE within multi-consecutive slots transmission (MCSt) or SL TX burst to which a PSCCH/PSSCH and/or a PSFCH belongs within the same slot, the UE may use the COT when transmitting the PSFCH. For example, when transmitting a PSCCH/PSSCH satisfying a COT condition (such as a target UE and/or a CAPC condition and/or an energy detection threshold (EDT) condition) within the COT, the UE may preferentially use a candidate resource of a slot including a PSFCH resource. When transmitting a PSCCH/PSSCH satisfying a COT condition (such as a target UE and/or a CAPC condition and/or an EDT condition) within the COT, the UE may preferentially use a resource for MCSt including a PSFCH to be transmitted by the UE and/or a slot in which the UE transmits a PSFCH.

For example, when transmitting multiple PSFCHs, the UE may limit transmit power of all or part of the PSFCHs in order to use a COT obtained or received by the UE. For example, in the case of the transmit power limitation, after the UE determines the number of PSFCHs to be simultaneously transmitted, the UE may commonly or differentially reduce the power (depending on a priority and/or a CAPC and/or a target UE and/or within or outside an RB set related to the COT) for the simultaneously transmitted PSFCHs. For example, the UE may change the total power sum for PSFCH transmissions within the RB set related to the COT to be less than or equal to the transmit power limitation for the use of the COT. For example, the UE may also reduce the power value for PSFCH transmissions outside the RB set related to the COT to match the power value for each PSFCH. For example, the transmit power limitation may be applied to the power sum for PSFCH transmissions within and/or outside the RB set related to the COT. For example, in the case of the transmit power limitation, the UE may further reduce the number of PSFCHs to be simultaneously transmitted. For example, the UE may determine the number of PSFCHs to be simultaneously transmitted by the UE within all RB sets or within the RB set related to the COT (based on a priority and/or a control information type and/or a target UE, etc.) based on the transmit power limitation.

For example, when transmitting a PSCCH/PSSCH, the UE may limit transmit power of the PSCCH/PSSCH in order to use a COT obtained or received by the UE. For example, the PSCCH/PSSCH may satisfy a condition for the COT (e.g., target UE(s) includes at least a COT initiating UE and/or a CAPC value is less than or equal to a CAPC value used when initializing the COT). For example, the UE may reduce the power value for the inside of the COT (in time and/or frequency) in the PSCCH/PSSCH resource. For example, the UE may reduce the power value for the inside and outside of the COT (in time and/or frequency) in the PSCCH/PSSCH resource. For example, the UE may change the PSD sum of the PSCCH/PSSCH in the RB set related to the COT to be less than or equal to the transmit power limitation for the use of the COT. For example, the UE may change the power value of the PSCCH/PSSCH to be less than or equal to the transmit power limitation for the use of the COT.

For example, when transmitting a single S-SSB or multiple S-SSBs, the UE may limit transmit power of all or part of S-SSBs in order to use a COT obtained or received by the UE. For example, in the case of the transmit power limitation, the UE may commonly or differentially reduce the power (depending on a priority and/or a CAPC and/or a target UE and/or within or outside an RB set related to the COT) for the simultaneously transmitted S-SSBs. For example, the UE may change the sum of the total power for S-SSB transmissions within the RB set related to the COT to be less than or equal to the transmit power limitation for the use of the COT. For example, the UE may also reduce the power value for S-SSB transmissions outside the RB set related to the COT to match the power value for each S-SSB. For example, the transmit power limitation may be applied to the sum of the power for S-SSB transmissions inside and/or outside the RB set related to the COT.

For example, a minimum power value for a SL channel/signal may be determined by the UE or (pre-)configured for each SL BWP and/or for each RB set and/or for each resource pool and/or for each SL channel type and/or for each SL priority and/or for each CAPC value and/or for each congestion control level and/or for each QoS parameter and/or for each basic resource (in time and/or frequency) and for each additional resource (in time and/or frequency) and/or for each inside or outside of the COT (in time and/or frequency), and/or when applying the maximum power limitation for the use of the COT, if the minimum power value cannot be guaranteed, the UE may skip transmission for the corresponding SL channel/signal and/or reselect resources and/or attempt transmission based on a type 1 channel access procedure.

For example, COT information for a receiver of a PSCCH/PSSCH transmitted by the COT initiating UE and COT information for a receiver matching an additional ID may be different and/or configured independently. For example, the COT durations (in frequency and/or time) according to the different COT information may not overlap each other.

For example, the COT duration for the receiver of the PSCCH/PSSCH transmitted by the COT initiating UE and the COT duration for the receiver matching the additional ID may be the same.

For example, COT sharing information may be transmitted through first SCI and/or second SCI, and/or a part of the COT sharing information may be transmitted through the first SCI and the remaining COT shared information may be transmitted through the second SCI. For example, a part of the COT sharing information may be transmitted by overlapping the same information through the first SCI and/or the second SCI and/or a MAC CE.

For example, at least a CAPC value (for the shared COT and/or the transmission of the UE) and/or information related to time and/or frequency resource(s) for the shared COT and/or information related to a target UE (ID) (and/or cast type information for the target transmission) and/or CPE start location information (for the transmission of the UE and/or the reserved resource(s)) may be included in first SCI (SCI format 1-A).

For example, at least information related to time and/or frequency resource(s) for the shared COT and/or information related to a target UE (ID) (and/or cast type information for target transmission) may be included in second SCI.

For example, a type and/or a format of second SCI that can include COT sharing information may be limited. For example, the second SCI format that can include the COT sharing information may be limited to a SCI format (e.g., SCI format 2-A) that can schedule/allocate a PSSCH for unicast and/or broadcast and/or groupcast. The rationale for this is that in the case of SCI format 2-B or SCI format 2-C, the current payload may already be excessive and there may be insufficient remaining space to additionally include COT sharing information. For example, the second SCI format that can include the COT sharing information may include SCI format 2-B, and the rationale for this is to support transmission of COT sharing information even when transmitting a TB for distance-based operation.

For example, the UE may not require or expect COT sharing information and IUC information to be provided simultaneously. For example, this may be limited to a case where the IUC information is transmitted through second SCI, and/or if it is transmitted only through a MAC CE, the UE may exceptionally be allowed to provide COT sharing information and IUC information simultaneously. For example, this may be limited to a case where the payload size for the second SCI configured based on the IUC information is greater than or equal to a certain level and/or a case where it does not include all or part of the IUC information and the COT sharing information.

For example, the UE may transmit a part of the COT sharing information through SCI format 1-A (1st SCI), and may not provide a part of the COT sharing information accordingly. For example, in the case of all or part of the COT sharing information not provided from the COT initiating UE, the COT responding UE may perform COT sharing by assuming a specific value.

For example, if there is no separate frequency domain resource indicator for a shared COT, the UE receiving COT sharing information may assume/configure the allocated subchannel(s) and/or RB set(s) for a PSCCH/PSSCH including the COT sharing information as a frequency domain for the shared COT.

For example, if there is no separate time domain resource indicator for a shared COT, the UE receiving COT sharing information may assume/configure, as a time domain for the shared COT, a (maximum) COT duration length according to a CAPC value for the shared COT from a slot in which a PSCCH/PSSCH including the COT sharing information is received. For example, the CAPC value for the shared COT may be indicated as part of the COT sharing information, and/or may be a minimum CAPC value and/or a maximum CAPC value and/or a (pre-)configured (default) CAPC value (at least if not indicated).

For example, whether or not COT sharing is enabled may be indicated through a separate field of SCI. For example, if a separate field (e.g., COT sharing flag field) of the first SCI indicates COT sharing, a CAPC field, a COT sharing cast type field, a COT sharing additional ID field, and/or a remaining COT duration field may be included in the second SCI. For example, if COT sharing is disabled through the field, the receiving UE may ignore all or part of the COT sharing information. For example, in the above situation, the receiving UE may obtain at least CAPC information and/or L1 source/destination ID related information (regardless of whether COT sharing is enabled or disabled).

For example, the UE may indicate whether or not COT sharing is enabled by using a specific value in part of the information for COT sharing.

For example, if the UE indicates a reserved state in frequency resource information for a shared COT and/or all bits are set to zero in a bitmap scheme and/or frequency resource information indicates a frequency resource outside a frequency allocation domain for a PSCCH/PSSCH including COT sharing information, COT sharing may be disabled.

For example, if the UE sets COT duration information to 0 in time resource information for a shared COT, COT sharing may be disabled.

Meanwhile, the UE may limit a COT target UE to a data receiving UE of a PSCCH/PSSCH including COT sharing information. For example, the UE may indicate whether to include and/or indicate target UE ID information through a separate field of first SCI and/or second SCI, and/or the receiving UE may ignore the COT target UE ID information if it is instructed that the COT target UE ID information is disabled. For example, the UE may configure COT target UE ID information and/or COT target cast type information to be identical to data target receiving UE information (destination ID) of a PSCCH/PSSCH including COT information and/or cast type information of the PSCCH/PSSCH. For example, if a COT target UE ID and/or a COT target cast type indicator indicate a specific value (e.g., all-zero or all-one ID and/or reserved state), the COT sharing target UE may be limited to the receiving UE of a PSCCH/PSSCH.

For example, if the UE considers shared COT information in resource (re)selection, and/or if the UE fails to detect second SCI, and/or if the requirement for using the shared COT is not satisfied (e.g., conditions based on a CAPC value and/or transmit power and/or whether the receiving UE is a COT initiating UE, etc.), and/or if the UE determines not to use the shared COT, the UE may exclude all or part of the time domain for the shared COT from the available resource set and/or deprioritize the transmission resource selection.

For example, if the UE considers shared COT information in resource (re)selection, and/or if the UE succeeds in detecting second SCI, and/or if the requirement for using the shared COT is satisfied (e.g., conditions based on a CAPC value and/or transmit power and/or whether the receiving UE is a COT initiating UE, etc.), and/or if the UE determines to use the shared COT, the UE may include all or part of the time domain for the shared COT in the available resource set (based on the additional sensing result of the UE) and/or prioritize the transmission resource selection.

For example, the UE may provide all or part of the COT sharing information to another UE through SCI format 2-C, and/or at a given time, the SCI format 2-C may indicate IUC information or IUC request information or COT sharing information, and which of the above information is included may be indicated by a separate field in the SCI format 2-C. For example, the size of the SCI format 2-C may be determined based on a maximum value for each of the cases of including the IUC information and/or including the IUC request information and/or including the COT sharing information, and may be adjusted to the same size through padding bits for the remaining cases. For example, the SCI format 2-C may include a cast type indicator if it includes at least the COT sharing information, and/or the SCI format 2-C may schedule/indicate a unicast PSSCH and/or a broadcast PSSCH and/or a groupcast PSSCH with SL HARQ-ACK feedback disabled and/or a groupcast PSSCH with SL HARQ-ACK feedback option 1 having distance-based operation and/or a groupcast PSSCH with SL HARQ-ACK feedback option 1 having non-distance-based operation and/or a groupcast PSSCH with SL HARQ-ACK feedback option 2. For example, the SCI format 2-C may include a zone ID and/or a maximum communication range indicator if it includes at least the COT sharing information. For example, if the transmission of IUC information and/or IUC request information is not (pre-)configured for a resource pool, the field sizes and interpretation methods for the transmission combination indicator to be transmitted and/or the combination of information that can be transmitted in the SCI format 2-C according to the configuration may be suitably configured/determined. For example, if the transmission of IUC information and IUC request information is not (pre-)configured for a resource pool, the SCI format 2-C may be used to indicate COT sharing information.

Meanwhile, it may be necessary to determine whether the decision on whether to transmit COT sharing information is made by the PHY layer or the MAC layer.

For example, whether to transmit COT sharing information may be determined by the PHY layer of the UE. For example, in the above situation, if the timing at which the UE transmits distance operation-based data overlaps with the timing at which the UE transmits COT sharing information, the UE may prioritize the transmission of the distance-based operation data. The reason for this is that, if only COT sharing information is transmitted, the UE may not perform resource (re)selection for COT sharing information transmission if there is no data corresponding to it. For example, in the above situation, if the timing at which the UE transmits distance operation-based data overlaps with the timing at which the UE transmits COT sharing information, the UE may prioritize COT sharing information transmission. The reason for this is to increase the transmission opportunity of SL transmission in the unlicensed band. For example, in the above situation, if the timing at which the UE transmits distance operation-based data overlaps with the timing at which the UE transmits COT sharing information, the UE may determine data or information to be prioritized based on each of the related CAPC values and/or each of the related SL priority values.

Embodiment(s) of the present disclosure may be a case where the 2nd SCI format for scheduling distance operation-based data and the SCI format for providing COT sharing information are different.

For example, whether to transmit COT sharing information may be determined by the MAC layer of the UE. For example, in the above situation, the PHY layer may report COT-related information to be shared (e.g., a CAPC value used when obtaining the COT and/or an EDT value and/or COT-related time and/or frequency resource(s)) to the MAC layer. For example, the MAC layer may determine whether to transmit COT sharing information and/or COT-related information based on data to be transmitted, and provide the related information to the PHY layer. For example, when the MAC layer transmits IUC information and/or IUC request information and/or intends to transmit the IUC-related information in SCI format 2-C, the MAC layer may determine not to transmit COT sharing information. For example, when the MAC layer transmits IUC information and/or IUC request information and/or intends to transmit the IUC-related information in SCI format 2-C, the MAC layer may determine to transmit COT sharing information and cancel the transmission of the IUC-related information. For example, when the MAC layer transmits IUC information and/or IUC request information and/or intends to transmit the IUC-related information in SCI format 2-C, the MAC layer may determine an information type to be prioritized or transmitted based on each of the priority values (e.g., to transmit the one with a smaller priority value) and/or each of the CAPC values (e.g., to transmit the one with a smaller CAPC value or a larger CAPC value) of the information. For example, the PHY layer may determine whether to transmit the COT sharing information based on the information provided from the MAC layer.

For example, the 2nd SCI format including the COT sharing information may be in the form of a separate format (SCI format 2-D), and/or the SCI format may schedule/indicate a unicast PSSCH and/or a broadcast PSSCH and/or a groupcast PSSCH with SL HARQ-ACK feedback disabled and/or a groupcast PSSCH with SL HARQ-ACK feedback option 1 having distance-based operation and/or a groupcast PSSCH with SL HARQ-ACK feedback option 1 having non-distance-based operation and/or a groupcast PSSCH with SL HARQ-ACK feedback option 2.

In embodiment(s) of the present disclosure, the transmission located outside the COT may be interpreted as transmission used when initializing the COT and/or transmission based on the type 1 channel access procedure.

The embodiment(s) of the present disclosure may be different and/or (pre-)configured per resource pool and/or per transmission outside and/or within a resource pool and/or per QoS parameter and/or per CAPC and/or per SL priority and/or per transmission within or outside COT (when initializing the COT) and/or per transmission order within MCSt and/or per SL channel type and/or per RB set and/or per SL BWP and/or per SL carrier and/or per congestion control level and/or per transmission operation or reception operation and/or per transmit power level and/or per transmission start time and/or per channel access procedure type for transmission and/or per LBT failure ratio and/or per COT initiator UE or COT responded UE or other UE and/or per cast type and/or per SL HARQ- ACK feedback enabled or disabled and/or per HARQ-ACK feedback option and/or per number of transmission attempts for the same information or TB. In the embodiment(s) of the present disclosure, (pre-)configuration may be performed per resource pool and/or per transmission outside and/or within a resource pool and/or per QoS parameter and/or per CAPC and/or per SL priority and/or per transmission within or outside COT (when initializing the COT) and/or per transmission order within MCSt and/or per SL channel type and/or per RB set and/or per SL BWP and/or per SL carrier and/or per congestion control level and/or per transmission operation or reception operation and/or per transmit power level and/or per transmission start time and/or per channel access procedure type for transmission and/or per LBT failure ratio and/or per COT initiator UE or COT responded UE or other UE and/or per cast type and/or per SL HARQ- ACK feedback enabled or disabled and/or per HARQ-ACK feedback option and/or per number of transmission attempts for the same information or TB.

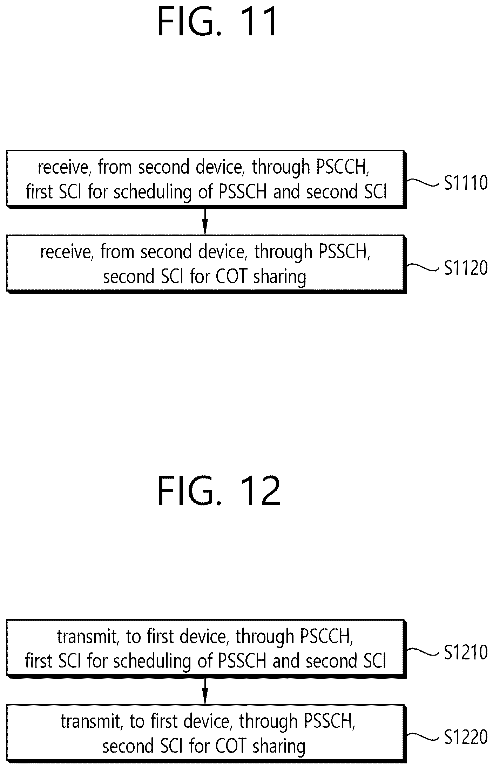

FIG. 11 shows a method for a first device to perform wireless communication, based on an embodiment of the present disclosure. The embodiment of FIG. 11 may be combined with various embodiments of the present disclosure.

Referring to FIG. 11, in step S1110, the first device may receive, from a second device, through a physical sidelink control channel (PSCCH), first sidelink control information (SCI) for scheduling of a physical sidelink shared channel (PSSCH) and second SCI. In step S1120, the first device may receive, from the second device, through the PSSCH, the second SCI for channel occupancy time (COT) sharing. For example, the second SCI may include a first source ID, a first destination ID, cast type information, COT sharing cast type information, and a COT sharing additional ID.

For example, the COT sharing cast type information may represent a cast type of sidelink transmission for using the COT sharing.

For example, based on the COT sharing cast type information representing broadcast, broadcast transmission may be performed by the first device based on the COT sharing.

For example, based on the COT sharing cast type information representing groupcast, groupcast transmission may be performed by the first device based on the COT sharing.

For example, based on the COT sharing cast type information representing unicast, unicast transmission may be performed by the first device based on the COT sharing.

For example, the COT sharing additional ID may include at least one of a second source ID or a second destination ID for using the COT sharing.

For example, the first SCI may include a field representing that information for the COT sharing is included in the second SCI. For example, based on the field representing that the information for the COT sharing is included in the second SCI, the second SCI may include the first source ID, the first destination ID, the cast type information, the COT sharing cast type information, and the COT sharing additional ID.

For example, the second SCI may further include information related to a COT duration.

Additionally, for example, the first device may perform sidelink transmission based on the COT sharing. For example, based on the PSCCH and the PSSCH being received within a frequency domain, the sidelink transmission may be performed within the frequency domain based on the COT sharing. For example, based on the second SCI not including frequency resource information for the COT sharing, the sidelink transmission may be performed within the frequency domain based on the COT sharing.

Additionally, for example, the first device may receive, from a third device, a PSSCH related to a second destination ID included in the COT sharing additional ID or the first destination ID. Additionally, for example, the first device may perform physical sidelink feedback channel (PSFCH) transmission in response to the PSSCH from the third device. For example, the PSFCH transmission may be performed based on the COT sharing. For example, even if the target of the PSFCH transmission does not include the second device, the PSFCH transmission may be performed based on the COT sharing.

For example, it may not be allowed that information for inter-UE coordination (IUC) and information for the COT sharing are included in the second SCI.

The proposed method can be applied to devices based on various embodiments of the present disclosure. First, the processor 102 of the first device 100 may control the transceiver 106 to receive, from a second device, through a physical sidelink control channel (PSCCH), first sidelink control information (SCI) for scheduling of a physical sidelink shared channel (PSSCH) and second SCI. In addition, the processor 102 of the first device 100 may control the transceiver 106 to receive, from the second device, through the PSSCH, the second SCI for channel occupancy time (COT) sharing. For example, the second SCI may include a first source ID, a first destination ID, cast type information, COT sharing cast type information, and a COT sharing additional ID.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: receiving, from a second device, through a physical sidelink control channel (PSCCH), first sidelink control information (SCI) for scheduling of a physical sidelink shared channel (PSSCH) and second SCI; and receiving, from the second device, through the PSSCH, the second SCI for channel occupancy time (COT) sharing. For example, the second SCI may include a first source ID, a first destination ID, cast type information, COT sharing cast type information, and a COT sharing additional ID.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: receiving, from a second device, through a physical sidelink control channel (PSCCH), first sidelink control information (SCI) for scheduling of a physical sidelink shared channel (PSSCH) and second SCI; and receiving, from the second device, through the PSSCH, the second SCI for channel occupancy time (COT) sharing. For example, the second SCI may include a first source ID, a first destination ID, cast type information, COT sharing cast type information, and a COT sharing additional ID.

Based on an embodiment of the present disclosure, a non-transitory computer-readable storage medium storing instructions may be provided. For example, the instructions, when executed, may cause a first device to perform operations comprising: receiving, from a second device, through a physical sidelink control channel (PSCCH), first sidelink control information (SCI) for scheduling of a physical sidelink shared channel (PSSCH) and second SCI; and receiving, from the second device, through the PSSCH, the second SCI for channel occupancy time (COT) sharing. For example, the second SCI may include a first source ID, a first destination ID, cast type information, COT sharing cast type information, and a COT sharing additional ID.

FIG. 12 shows a method for a second device to perform wireless communication, based on an embodiment of the present disclosure. The embodiment of FIG. 12 may be combined with various embodiments of the present disclosure.

Referring to FIG. 12, in step S1210, the second device may transmit, to a first device, through a physical sidelink control channel (PSCCH), first sidelink control information (SCI) for scheduling of a physical sidelink shared channel (PSSCH) and second SCI. In step S1220, the second device may transmit, to the first device, through the PSSCH, the second SCI for channel occupancy time (COT) sharing. For example, the second SCI may include a first source ID, a first destination ID, cast type information, COT sharing cast type information, and a COT sharing additional ID.

For example, the COT sharing cast type information may represent a cast type of sidelink transmission for using the COT sharing.

For example, based on the COT sharing cast type information representing broadcast, broadcast transmission may be performed by the first device based on the COT sharing.

For example, based on the COT sharing cast type information representing groupcast, groupcast transmission may be performed by the first device based on the COT sharing.

For example, based on the COT sharing cast type information representing unicast, unicast transmission may be performed by the first device based on the COT sharing.

For example, the COT sharing additional ID may include at least one of a second source ID or a second destination ID for using the COT sharing.

For example, the first SCI may include a field representing that information for the COT sharing is included in the second SCI. For example, based on the field representing that the information for the COT sharing is included in the second SCI, the second SCI may include the first source ID, the first destination ID, the cast type information, the COT sharing cast type information, and the COT sharing additional ID.

For example, the second SCI may further include information related to a COT duration.

Additionally, for example, the first device may perform sidelink transmission based on the COT sharing. For example, based on the PSCCH and the PSSCH being received within a frequency domain, the sidelink transmission may be performed within the frequency domain based on the COT sharing. For example, based on the second SCI not including frequency resource information for the COT sharing, the sidelink transmission may be performed within the frequency domain based on the COT sharing.

For example, it may not be allowed that information for inter-UE coordination (IUC) and information for the COT sharing are included in the second SCI.

The proposed method can be applied to devices based on various embodiments of the present disclosure. First, the processor 202 of the second device 200 may control the transceiver 206 to transmit, to a first device, through a physical sidelink control channel (PSCCH), first sidelink control information (SCI) for scheduling of a physical sidelink shared channel (PSSCH) and second SCI. In addition, the processor 202 of the second device 200 may control the transceiver 206 to transmit, to the first device, through the PSSCH, the second SCI for channel occupancy time (COT) sharing. For example, the second SCI may include a first source ID, a first destination ID, cast type information, COT sharing cast type information, and a COT sharing additional ID.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: transmitting, to a first device, through a physical sidelink control channel (PSCCH), first sidelink control information (SCI) for scheduling of a physical sidelink shared channel (PSSCH) and second SCI; and transmitting, to the first device, through the PSSCH, the second SCI for channel occupancy time (COT) sharing. For example, the second SCI may include a first source ID, a first destination ID, cast type information, COT sharing cast type information, and a COT sharing additional ID.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: transmitting, to a first device, through a physical sidelink control channel (PSCCH), first sidelink control information (SCI) for scheduling of a physical sidelink shared channel (PSSCH) and second SCI; and transmitting, to the first device, through the PSSCH, the second SCI for channel occupancy time (COT) sharing. For example, the second SCI may include a first source ID, a first destination ID, cast type information, COT sharing cast type information, and a COT sharing additional ID.

Based on an embodiment of the present disclosure, a non-transitory computer-readable storage medium storing instructions may be provided. For example, the instructions, when executed, may cause a second device to perform operations comprising: transmitting, to a first device, through a physical sidelink control channel (PSCCH), first sidelink control information (SCI) for scheduling of a physical sidelink shared channel (PSSCH) and second SCI; and transmitting, to the first device, through the PSSCH, the second SCI for channel occupancy time (COT) sharing. For example, the second SCI may include a first source ID, a first destination ID, cast type information, COT sharing cast type information, and a COT sharing additional ID.

Based on various embodiments of the present disclosure, COT sharing information can include additional ID information and cast type information of SL transmission that can use the COT. For example, COT sharing information can be transmitted through SCI format 2-A, and at least whether additional ID information is present and/or information whether COT sharing is enabled can be indicated by the first SCI. For example, the RB set for COT sharing may be the same as the RB set occupied by the PSCCH/PSSCH including the COT sharing information. Through this, when using the COT sharing, fairness issues due to L1 ID collisions can be alleviated, and SCI overhead can be optimized depending on the presence or absence of the COT sharing information, etc.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

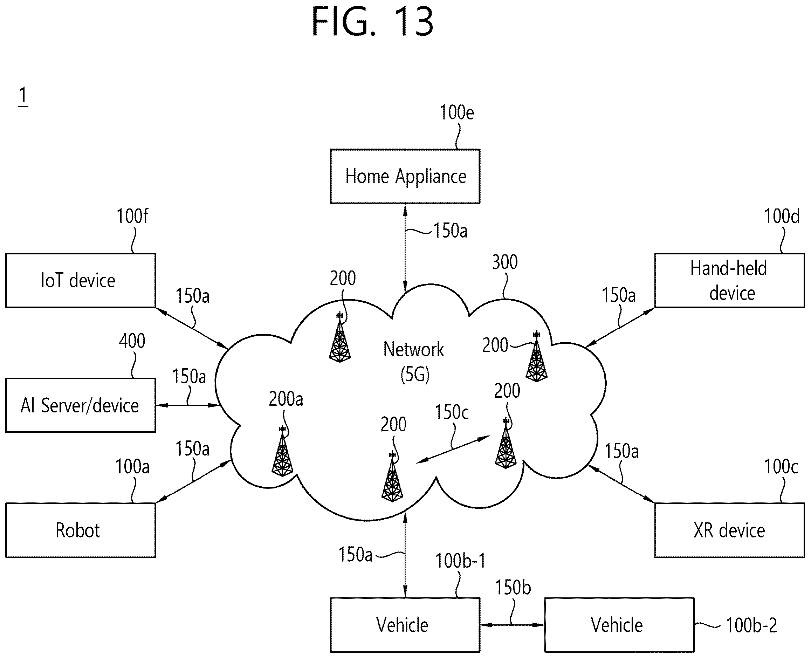

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

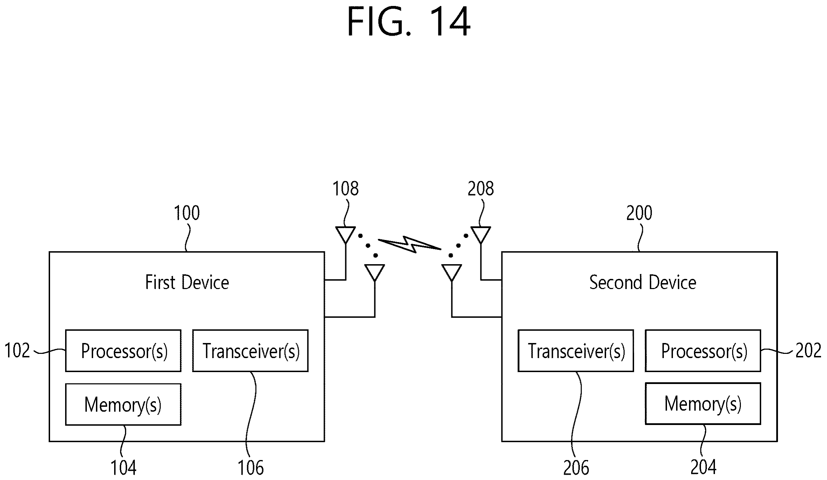

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

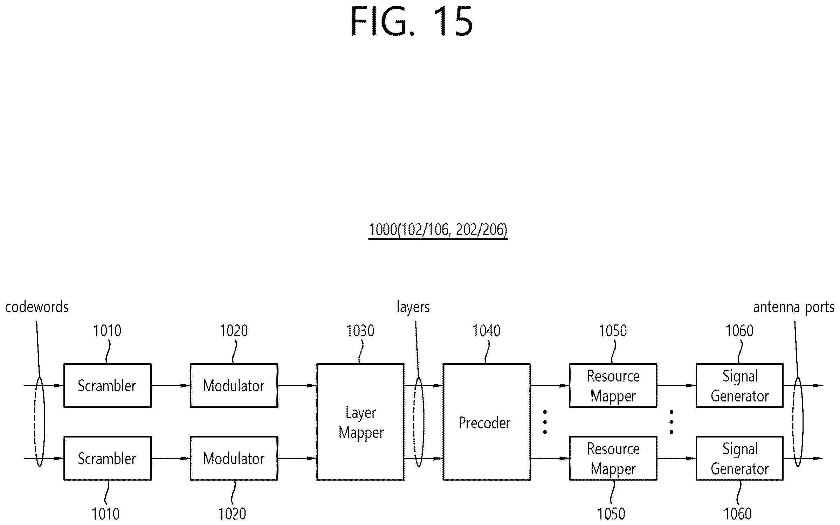

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

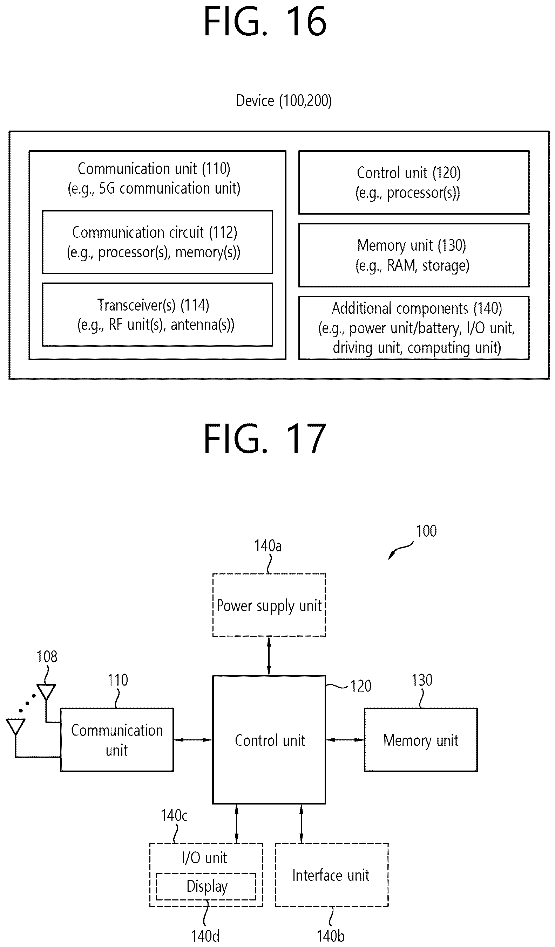

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

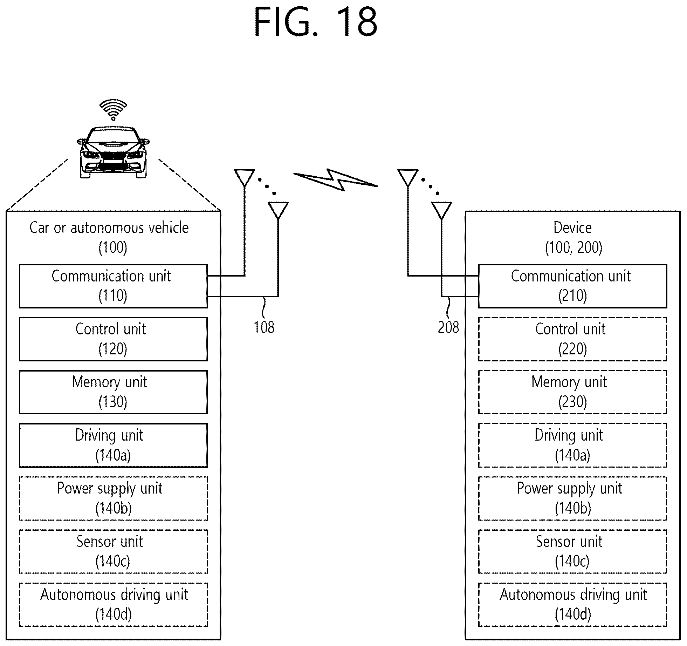

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
receiving, from a second device, through a physical sidelink control channel (PSCCH), first sidelink control information (SCI) for scheduling of a physical sidelink shared channel (PSSCH) and second SCI; and
receiving, from the second device, through the PSSCH, the second SCI for channel occupancy time (COT) sharing,
wherein the second SCI includes a first source ID, a first destination ID, cast type information, COT sharing cast type information, and a COT sharing additional ID.

2. The method of claim 1, wherein the COT sharing cast type information represents a cast type of sidelink transmission for using the COT sharing.

3. The method of claim 1, wherein, based on the COT sharing cast type information representing broadcast, broadcast transmission is performed by the first device based on the COT sharing.

4. The method of claim 1, wherein, based on the COT sharing cast type information representing groupcast, groupcast transmission is performed by the first device based on the COT sharing.

5. The method of claim 1, wherein, based on the COT sharing cast type information representing unicast, unicast transmission is performed by the first device based on the COT sharing.

6. The method of claim 1, wherein the COT sharing additional ID includes at least one of a second source ID or a second destination ID for using the COT sharing.

7. The method of claim 1, wherein the first SCI includes a field representing that information for the COT sharing is included in the second SCI.

8. The method of claim 7, wherein, based on the field representing that the information for the COT sharing is included in the second SCI, the second SCI includes the first source ID, the first destination ID, the cast type information, the COT sharing cast type information, and the COT sharing additional ID.

9. The method of claim 1, wherein the second SCI further includes information related to a COT duration.

10. The method of claim 1, further comprising:
performing sidelink transmission based on the COT sharing.

11. The method of claim 10, wherein, based on the PSCCH and the PSSCH being received within a frequency domain, the sidelink transmission is performed within the frequency domain based on the COT sharing.

12. The method of claim 11, wherein, based on the second SCI not including frequency resource information for the COT sharing, the sidelink transmission is performed within the frequency domain based on the COT sharing.

13. The method of claim 1, further comprising:
receiving, from a third device, a PSSCH related to a second destination ID included in the COT sharing additional ID or the first destination ID; and
performing physical sidelink feedback channel (PSFCH) transmission in response to the PSSCH from the third device,
wherein the PSFCH transmission is performed based on the COT sharing.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
receiving, from a second device, through a physical sidelink control channel (PSCCH), first sidelink control information (SCI) for scheduling of a physical sidelink shared channel (PSSCH) and second SCI; and
receiving, from the second device, through the PSSCH, the second SCI for channel occupancy time (COT) sharing,
wherein the second SCI includes a first source ID, a first destination ID, cast type information, COT sharing cast type information, and a COT sharing additional ID.

15. A processing device adapted to control a first device, the processing device comprising:
at least one processor; and
at least one memory connected to the at least one processor and storing instructions that, based on being executed by the at least one processor, cause the first device to perform operations comprising:
receiving, from a second device, through a physical sidelink control channel (PSCCH), first sidelink control information (SCI) for scheduling of a physical sidelink shared channel (PSSCH) and second SCI; and
receiving, from the second device, through the PSSCH, the second SCI for channel occupancy time (COT) sharing,
wherein the second SCI includes a first source ID, a first destination ID, cast type information, COT sharing cast type information, and a COT sharing additional ID.

16. A non-transitory computer-readable storage medium storing instructions that, when executed, cause a first device to perform operations comprising:
receiving, from a second device, through a physical sidelink control channel (PSCCH), first sidelink control information (SCI) for scheduling of a physical sidelink shared channel (PSSCH) and second SCI; and
receiving, from the second device, through the PSSCH, the second SCI for channel occupancy time (COT) sharing,
wherein the second SCI includes a first source ID, a first destination ID, cast type information, COT sharing cast type information, and a COT sharing additional ID.

17. A method for performing wireless communication by a second device, the method comprising:
transmitting, to a first device, through a physical sidelink control channel (PSCCH), first sidelink control information (SCI) for scheduling of a physical sidelink shared channel (PSSCH) and second SCI; and
transmitting, to the first device, through the PSSCH, the second SCI for channel occupancy time (COT) sharing,
wherein the second SCI includes a first source ID, a first destination ID, cast type information, COT sharing cast type information, and a COT sharing additional ID.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
transmitting, to a first device, through a physical sidelink control channel (PSCCH), first sidelink control information (SCI) for scheduling of a physical sidelink shared channel (PSSCH) and second SCI; and
transmitting, to the first device, through the PSSCH, the second SCI for channel occupancy time (COT) sharing,
wherein the second SCI includes a first source ID, a first destination ID, cast type information, COT sharing cast type information, and a COT sharing additional ID.

19. A processing device adapted to control a second device, the processing device comprising:
at least one processor; and
at least one memory connected to the at least one processor and storing instructions that, based on being executed by the at least one processor, cause the second device to perform operations comprising:
transmitting, to a first device, through a physical sidelink control channel (PSCCH), first sidelink control information (SCI) for scheduling of a physical sidelink shared channel (PSSCH) and second SCI; and
transmitting, to the first device, through the PSSCH, the second SCI for channel occupancy time (COT) sharing,
wherein the second SCI includes a first source ID, a first destination ID, cast type information, COT sharing cast type information, and a COT sharing additional ID.

20. A non-transitory computer-readable storage medium storing instructions that, when executed, cause a second device to perform operations comprising:
transmitting, to a first device, through a physical sidelink control channel (PSCCH), first sidelink control information (SCI) for scheduling of a physical sidelink shared channel (PSSCH) and second SCI; and
transmitting, to the first device, through the PSSCH, the second SCI for channel occupancy time (COT) sharing,
wherein the second SCI includes a first source ID, a first destination ID, cast type information, COT sharing cast type information, and a COT sharing additional ID.
